# EUROPÄISCHE PATENTSCHRIFT

(11) **EP 1 941 597 B1**
(45) Veröffentlichungstag und Bekanntmachung des Hinweises auf die Patenterteilung: **13.06.2012**
(21) Anmeldenummer: 06807034.1
(22) Anmeldetag: 06.10.2006
(51) Int. Cl.: H02K 1/27

(54) **VERFAHREN ZUR HERSTELLUNG EINES ROTORS FÜR EINE ELEKTRISCHE MASCHINE**
PRODUCTION METHOD FOR ROTOR FOR AN ELECTRICAL MACHINE
PROCÉDÉ DE FABRICATION D'UN ROTOR POUR UNE MACHINE ELECTRIQUE

(30) Priorität: 11.10.2005 DE 102005048546
(43) Veröffentlichungstag der Anmeldung: 09.07.2008
(73) Patentinhaber: ROBERT BOSCH GMBH, 70442 Stuttgart (DE)
(72) Erfinder: KOENIG, Tilo, 77815 Buehl (DE); SCHUETZ, Juergen, 77866 Rheinau (DE); AHRENS, Dietmar, 77933 Lahr (DE)
(86) Internationale Anmeldenummer: PCT/EP2006/067132
(87) Internationale Veröffentlichungsnummer: WO 2007/042473

(56) Entgegenhaltungen:
- EP-A- 0 459 355
- EP-A2- 1 427 088
- DE-A1- 3 913 618
- US-A- 5 397 951
- US-A1- 2003 137 203

## Beschreibung

### Stand der Technik

Die vorliegende Erfindung betrifft einen Rotor für eine elektrische Maschine, insbesondere einen bürstenlosen DC-Motor, mit einem Rotorkörper, der eine im Wesentlichen zylindrische Form aufweist, und mit wenigstens einem Magneten mit einer Auflagefläche, der am Umfang des Rotorkörpers angeordnet ist.

Bürstenlose DC-Motoren werden im Stand der Technik häufig mit separaten Oberflächenmagneten ausgerüstet. Die Magnete werden auf den magnetisch leitenden Rückschluss beim überwiegenden Teil der DC-Motoren aufgeklebt. Dabei sind verschiedene Magnetformen bekannt, beispielsweise Schalen, Quader oder Magnete in D-Form, welche auch als "Brotlaibe" bezeichnet werden. Die Rückschlüsse der DC-Motoren sind entweder einstückig aus Stahl gebildet oder bestehen aus Blechpaketen, die aus aufeinander liegenden Blechen gebildet werden. Die Bleche können dabei zueinander isoliert oder auch stanzpaketiert sein.

Die Ausrichtung der Magnete auf dem Rückschluss zueinander erfolgt zum Teil mit einem Hilfsadapter aus Kunststoff oder Federn, die den Abstand zwischen benachbarten Magneten gewährleisten. Dieser Kunststoffadapter hat die Aufgabe, die aufgeklebten Magnete während des Aushärtevorgangs zu positionieren. Fachleute sehen daher in dem Adapter ein "verlorenes Teil", da es für die Funktion des Rotors nicht von Bedeutung ist.

Alternativ zu diesem Adapter können Magnete auch während des Aushärtevorgangs des Klebstoffes durch aufwändige und kostenintensive Hilfsvorrichtungen positioniert bzw. angedrückt werden. Die Hilfsvorrichtungen müssen nach dem Aushärten des Klebers wieder entfernt werden. Je nach Klebstoff kann der Aushärtevorgang bis zu 24 Stunden betragen. Dabei darf der Klebstoff die Hilfsvorrichtung nicht berühren.

Mit der US-A-5397951 ist ein Rotor einer elektrischen Maschine bekannt geworden, bei der gewölbte Permanentmagnete mittels einer Schwalbenschwanzverbindung formschlüssig auf dem Rotor fixiert werden.

Die US 2003/137203 A1 zeigt einen Rotor eines Leckmotors, der an seinem äußeren Umfang Taschen aufweist, in die mittels federnden Fortsätzen in Umfangsrichtung die Permanentmagnete eingepresst werden.

In der EP-A-0459355 sind ringsegmentförmige Permanentmagneten auf dem Kern des Rotors angeordnet Die Permanentmagnete werden mittels einer äußeren Hülse auf dem Rotor gehalten, wobei in Umfangsrichtung zwischen den Permanentmagneten Federelemente angeordnet sind.

### Vorteile der Erfindung

Die erfindung betrifft ein Verfahren zur Herstellung eines Rotors gemäß Anspruch 1. Die Unteransprüche zeigen bevorzugte Weiterbildungen der Erfindung.

Dies weist den Vorteil auf, dass ein Magnet schnell und zuverlässig am Rotorkörper befestigt werden kann. Eine vorgegebene Positionierung lässt sich exakt und eindeutig vornehmen. Die Position des Magneten wird auch ohne weitere Hilfsmittel oder Werkzeuge beibehalten. Vorteilhaft ist es, dass eine Positionierung des Magneten auf eine genaue Winkelposition zu anderen Merkmalen, wie beispielsweise in Bezug auf weitere Rückschlüsse mit Magneten oder in Bezug auf eine Sensorik möglich ist. Darüber hinaus können neben unmagnetisierten Magneten auch bereits magnetisierte Magnete verarbeitet werden, ohne dass sich diese durch auftretende magnetische Kräfte verschieben. Der erfindungsgemäße Rotor mit einem Rotorkörper, der eine im wesentlichen zylindrische Form aufweist, und mit wenigstens einem Magneten, der entlang des Umfangs des Rotorkörpers angeordnet ist, weist wenigstens einen radial nach au-βen gerichteten Steg auf, der in Längsrichtung des Rotorkörpers ausgerichtet ist. Der Magnet liegt an dem in Längsrichtung ausgerichteten Steg an und wird von diesem ausgerichtet. Beim manuellen Bestücken der Rotoren mit mehreren Magneten bietet der Steg eine Ausrichtungshilfe, an der der Magnet angelegt werden kann. Bei der maschinellen und automatischen Bestückung der Rotoren mit Magneten dient der Steg als Führungsschiene, die die Ausrichtung des Magneten unterstützt und ein nachträgliches Verrutschen vermeidet. Der Steg kann somit eine richtige Positionierung des Magneten sicherstellen.

Der Rotorkörper weist entlang seines Umfangs wenigstens eine Aufnahmefläche für einen Magneten auf. Diese Aufnahmefläche wird seitlich von zwei Stegen begrenzt. Die Stege sind ebenfalls in Längsrichtung ausgerichtet. Ein Magnet wird dann zwischen die beiden Stege eingebracht, nach beiden Seiten hin ausgerichtet und so in einer möglichen Bewegung begrenzt. Somit wird verhindert, dass der Magnet in Längsrichtung verdreht positioniert wird. In Abhängigkeit von der gewünschten Anzahl von zu positionierenden Magneten entsteht eine vorgegebene Anzahl von Aufnahmeflächen. Die benachbarten Aufnahmeflächen sind jeweils durch einen Steg begrenzt. Damit kann der gesamte Rotorkörper entlang des Umfangs abwechselnd mit Aufnahmeflächen und Stegen ausgeführt sein. Somit ergibt sich eine gute Halterung und Fixierung der Magnete, was gerade beim Aushärtevorgang eines aufgetragenen Klebstoffs wichtig ist. Es müssen keine aufwändigen zusätzlichen Hilfseinrichtungen vorgesehen werden, um beim Einkleben des Magneten diesen während des Aushärtevorgangs zu fixieren. Ein einfaches elastisches Band, das um den Rotor gespannt wird, reicht z. B. zur Fixierung aus, da die Magnete zwischen den seitlichen Stegen gehalten werden. Die Kosten für Fixiereinrichtungen können also deutlich reduziert werden.

Die Stege am Rotorkörper sind so angeordnet, dass die Magnete positioniert werden und in ihrer Position gehalten werden. Dabei werden über den gesamten Rotorkörper mehrere Stege in Längsrichtung ausgerichtet. Auch vormagnetisierte Magnete lassen sich auf einfache Weise verarbeiten und montieren. Die Magnete sind zwischen den Stegen ausgerichtet und gleichzeitig fixiert. Es müssen keine zusätzlichen Hilfseinrichtungen oder Vorrichtungen verwendet werden, um einen definierten Abstand zwischen zwei benachbarten Magneten herzustellen.

Dem Rotordesign liegen somit auch Poka-Yoke-Prinzipien zugrunde. Ein Magnet lässt sich nur in richtigen und unverwechselbaren und ein-eindeutigen Positionen anbringen. Es entstehen keinerlei Wahlmöglichkeiten in der Anordnung und somit auch keine Entscheidungsspielräume für einen Monteur, der die Magnete am Rotorkörper aufzukleben hat. Dies führt zu einer fehlerfreien, schnelleren und effizienteren Montage.

Besonders bevorzugt ist der Abstand zwischen zwei benachbarten Stegen wenig größer als die Breite der Magnete selbst. Dadurch kann die Ausrichtung der Magnete weiter verbessert werden. Mögliche Positionstoleranzen zwischen den einzelnen Magneten werden damit weiter verringert, so dass im Endeffekt eine höhere Qualität bei der Herstellung der Rotoren erzielt wird.

Weiterhin bevorzugt sind die benachbarten Stege so angeordnet, dass die Magnete zwischen ihnen eingeklipst werden können. Damit findet eine Befestigung der Magnete durch Einklipsen statt. Der Magnet verharrt in seiner Position, auch wenn der Rotor weitergedreht wird. Dies ist besonders dann wichtig, wenn zwischen Magnet und Rotor ein Klebstoff aufgebracht wird. In der Aushärtungsphase des Klebstoffs muss dann keine weitere Maßnahme vorgesehen werden, um ein Verrutschen zu verhindern. Dies ist unabhängig davon, ob der Rotorkörper zum Aushärten in einem Ofen oder Umluftofen positioniert wird oder ob der Kleber z. B. durch anaerobe Reaktion bei Raumtemperatur härtet.

Besonders bevorzugt sind die Stege einstückig mit dem Rotorkörper gebildet. Bei einer einstückigen Ausführungsform besteht keine Gefahr, dass die Stege abbrechen oder in ihrer Position selbst verrutschen. Ein Trennen von Steg und Rotorkörper ist nicht möglich. Besteht der Rotorkörper aus einem Stück, so können die Zwischenräume zwischen den Stegen aus dem Vollmaterial herausgeschliffen oder gefräst werden. Anders jedoch bei Rotorkörpern, die aus Blechpaketen bestehen, welche aus einer Vielzahl aus aneinander gereihten dünnen Blechen aufgebaut sind. Die Bleche werden bei ihrer Herstellung ausgestanzt. Damit kann auf einfache Weise durch Verändern der Stanzform auch das einzelne Blech verändert werden. Insgesamt entsteht ein Rotorkörper mit einstückig versehenen Stegen, der in der Herstellung nicht, bzw. nur unwesentlich teurer ist, als ein Rotorkörper ohne Stege.

Vorzugsweise liegen die Magnete im Wesentlichen an den Seitenbereichen ihrer Auflageflächen am Rotorkörper auf. Somit ergeben sich zwei in Längsrichtung gerichtete schmale Auflageflächen, so dass von einer Auflage auf zwei Linien gesprochen werden kann. Es wird damit eine definierte Linienberührung zwischen dem Rückschluss bzw. Rotor und dem Magneten hergestellt. Der Magnet liegt also sehr definiert am Rotorkörper auf und kann weder wackeln noch kippeln. Es ergibt sich somit ein Spalt zwischen der Aufnahmefläche des Rotors und der Unterseite des Magneten. Dieser Spalt kann zur Aufnahme von Klebstoffen verwendet werden.

Besonders vorteilhaft erweist sich ein Rotor, bei dem die Aufnahmefläche des Rotorkörpers eine Krümmung aufweist, die von der Krümmung der Auflagefläche des Magneten verschieden ist. Dabei sind die beiden Krümmungen derart zu wählen, dass der Magnet nur an den Randbereichen der Auflagefläche an der Aufnahmefläche des Rotorkörpers aufliegt. Es lässt sich somit durch geeignete Wahl der Krümmungen ein definierter Spalt zwischen Rotorkörper und Magnet herstellen. Überdies entsteht gleichfalls ein definierter Klebespalt bzw. ein vorbestimmtes Volumen zur Aufnahme von Klebstoff. Dies kann mit der aufzutragenden Klebstoffmenge korrelieren, so dass wenig bis gar kein Klebstoff aus dem Spalt heraustritt und trotzdem eine großflächige Verklebung von Magnet und Rotorkörper stattfindet. Ein derartiges Konzept ermöglicht auch in der Auswahl der Klebstoffe variabel zu sein. So können eine Vielzahl von Klebstoffe eingesetzt werden, beispielsweise Expoxies, Acrylate, Silikone oder Polyurethane. Der Klebstoff kann also gewechselt werden, ohne dass Einfluss auf das Design des Rotorkörpers oder der Magnete genommen werden muss.

Am unteren Ende der Stege ist jeweils eine Verjüngung vorgesehen. Diese Verjüngung kann z. B. mittels Freistanzen hergestellt werden. Damit ergibt sich kurz oberhalb der Aufnahmefläche des Rotorkörpers ein Hohlraum an unteren Ende des Steges zwischen Magnet und Rotorpaket. In diesem zur Verfügung stehenden Hohlraum können beispielsweise überstehende Kanten von scharfkantigen Magneten aufgenommen werden. Damit ist der Rotor mit derartigen Stegen unabhängig vom Kantenradius der Magnete. Darüber hinaus bildet der Hohlraum auch ein Reservat um überschüssigen Klebstoff aufnehmen zu können. Wird der zwischen dem Magneten und dem Rotorkörper aufgebrachte Klebstoff beim Andrücken des Magneten an den Rotorkörper zur Seite gedrückt, so wird in diesem Hohlraum eine gewisse Menge an Klebstoff aufgenommen und tritt nicht über den Steg hinaus aus. Es kommt somit zu keinem Verkleben der äußeren Oberfläche der Magnete bzw. des oberen Endes der Stege und somit nicht zur Verklebung mit Fertigungseinrichtungen.

Der Rotorkörper weist im Randbereich der Stege jeweils eine Ausnehmung bzw. Mulde auf. Die Mulde ist an der Aufnahmefläche des Rotorkörpers angebracht. Auch diese hat den Zweck, überschüssigen Klebstoff in einer Art Klebstoffreservat aufzunehmen. Die Mulde am Rotorkörper geht in den Hohlraum am Fuß der Stege über.

Gemäß einer weiteren bevorzugten Ausgestaltung der Erfindung umfasst der Steg in Längsrichtung des Rotors einen ersten Teil und einen zweiten Teil, wobei der erste Teil zum zweiten Teil in Umfangsrichtung des Rotors versetzt angeordnet ist. Somit entsteht ein Rotor mit zwei Bereichen, deren Anordnung der Stege und Magnete in gewissem Umfang zueinander verdreht ist. Die Bildung der beiden Bereiche am Rotor hat dabei den Vorteil, dass Rastpositionen des Rotors, an welchen der Rotor stehen bleiben kann, verhindert werden können. Dabei kann insbesondere auch auf eine im Stand der Technik bekannte Schrägung des Rotors verzichtet werden. Die versetzte Anordnung zweier Bereiche des Rotors hat zwar den Nachteil einer etwas geringeren Leistung, jedoch kann sicher ein Stehen bleiben des Rotors an unerwünschten Positionen verhindert werden.

Vorzugsweise ist ein Winkel der Versetzung zwischen dem ersten Teil des Steges und dem zweiten Teil des Steges zwischen 0,1° und 30°. Besonders bevorzugt liegt der Winkel dabei zwischen 5° und 20°.

### Zeichnungen

Nachfolgend werden unter Bezugnahme auf die Zeichnungen bevorzugte Ausführungsbeispiele der Erfindung im Detail beschrieben. Es zeigen:
- Figur 1: eine perspektivische Ansicht eines Rotors mit einem Magneten gemäß einem ersten Ausführungsbeispiel der Erfindung;
- Figur 2: eine Draufsicht auf den Rotor aus Figur 1, nun mit sechs Magneten bestückt;
- Figur 3: einen Detailausschnitt des Rotors aus Figur 2; und
- Figur 4: eine perspektivische Ansicht eines Rotors gemäß einem zweiten Ausführungsbeispiel der Erfindung.

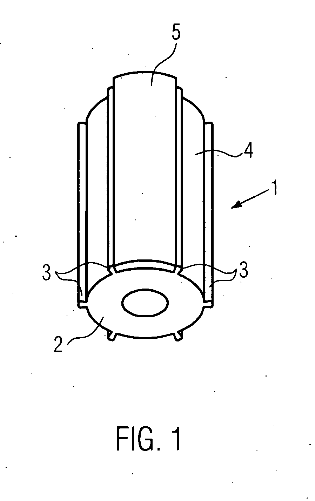

Figur 1 zeigt einen Rotor 1 eines bürstenlosen DC-Motors mit einem Rotorkörper 2 gemäß einem ersten Ausführungsbeispiel der Erfindung. Der Rotorkörper 2 hat entlang seines Umfangs sechs in Längsrichtung des Rotorkörpers 2 ausgerichtete Stege 3, die äquidistant über den Rotorkörper 2 verteilt sind. Zwischen jeweils zwei Stegen 3 ist eine Aufnahmefläche 4 ausgebildet, die zur Aufnahme von Magneten 5 dient. Der Magnet 5 liegt auf der Aufnahmefläche 4 auf und ist zwischen zwei benachbarten Stegen 3 angeordnet. Die Stege 3 verlaufen über die gesamte Länge des Rotorkörpers 2.

Der in Figur 1 gezeigte Rotor 1 ist erst mit einem Magnet 5 bestückt. Fünf weitere Aufnahmeflächen 4 sind noch frei und werden in weiteren Arbeitsschritten mit Magneten bestückt.

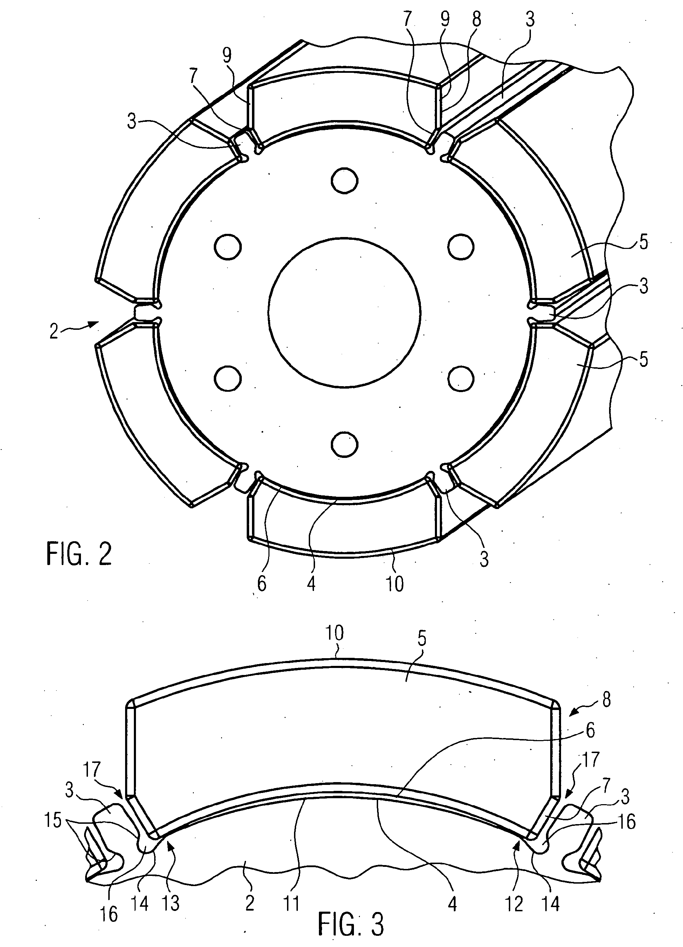

Figur 2 zeigt eine Draufsicht auf den Rotorkörper 2 aus Figur 1. Der Rotorkörper 2 ist nun mit sechs Magneten 5 bestückt. Die Magnete 5 sind jeweils zwischen zwei Stegen 3 angeordnet. Die Magnete 5 liegen mit ihrer Auflagefläche 6 auf der Aufnahmefläche 4 des Rotorkörpers 2 auf. Die Magnete 5 überragen die Stege 3 deutlich. Ein unterer Teil 7 einer Seitenfläche 8 des Magneten 5 verläuft im Wesentlichen parallel zum Steg 3. Etwa am oberen Ende des Stegs 3 geht die Seitenfläche 8 in einen oberen Teil 9 über, der in etwa einen Winkel von 60 Grad zum unteren Teil 7 aufweist. Der obere Teil 9 einer Seitenfläche 8 ist so ausgerichtet, dass er mit dem oberen Teil 9 der zweiten Seitenfläche 8 desselben Magneten 5 parallel verläuft. Somit ergibt sich zwischen zwei benachbarten Magneten 5 eine Kerbe von zirka 120 Grad.

Die Auflagefläche 6 des Magneten 5 verläuft in etwa parallel zur Oberfläche 10 des Magneten 5.

In Figur 2 ist weiter zu erkennen, dass der Rotorkörper 2 aus einem Blechpaket besteht, was mehrere aufeinander geschichtete Bleche umfasst. Die einzelnen Bleche des Rotorkörpers 2 werden jeweils gestanzt. Dadurch bleiben die Kosten für die Herstellung des Rotorkörpers gleich, obwohl die Kontur des einzelnen Bleches eine geänderte Form, nämlich Stege 3 aufweist.

Die Detailansicht in Figur 3 zeigt einen Magneten 5, der auf dem Rotorkörper 2 aufgeklebt ist. Der Magnet 5 ist zwischen zwei benachbarten Stegen 3 angeordnet. Deutlich zu erkennen ist, dass die Auflagefläche 6 des Magneten 5 einen anderen Krümmungsradius aufweist als die Aufnahmefläche 4 des Rotorkörpers 2. Dadurch ergibt sich ein Spalt 11 zwischen der Auflagefläche 6 und der Aufnahmefläche 4. Der Magnet 5 selbst liegt nur an dem rechten und linken Randbereich 12,13 mit seiner Auflagefläche 6 der Aufnahmefläche 4 des Rotorkörpers 2 auf. Dadurch wird ein Wackeln oder Kippeln des Magneten 5 auf dem Rotorkörper 2 verhindert.

Der Spalt 11 zwischen dem Rotorkörper 2 und dem Magneten 5 dient zur Aufnahme eines Klebstoffs, um den Magneten 5 auf den Rotorkörper 2 aufzukleben.

Die Aufnahmefläche 4 des Rotorkörpers 2 weist in den Randbereichen 12, 13 je eine Mulde 14 auf. Die Mulde 14 geht in eine Verjüngung 15 des Steges 3 über. Damit wird ein Hohlraum 16 geschaffen, der überschüssigem Klebstoff aufnimmt.

Ist der Magnet 5 an seiner unteren Kante scharfkantig oder nicht vollständig gratfrei, so kann der überstehende Grat im Hohlraum 16 aufgenommen werden. Damit lassen sich Magnete fast unabhängig von ihrer Kantenbeschaffenheit positionieren.

Zwischen dem unteren Teil 7 der Seitenflächen 8 und dem Steg 3 bildet sich ein Abstand 17, der ebenfalls mit Klebstoff gefüllt werden kann. Hier kann zum einen überflüssiger Klebstoff hineinfließen, zum anderen kann der Steg 3 auch mit Klebstoff bestrichen werden, so dass der Abstand 17 ausgefüllt wird und der Magnet 5 auch zwischen zwei benachbarten Stegen 3 seitlich geklebt wird. Alternativ kann auch kein Abstand zwischen Stegen 3 und dem Magnet vorgesehen werden, so dass der Magnet zwischen zwei benachbarte Stege eingeklipst werden kann. Ferner dient der Abstand 17 auch zur Aufnahme von toleranzbedingten Maßüberschreitungen der Magnete.

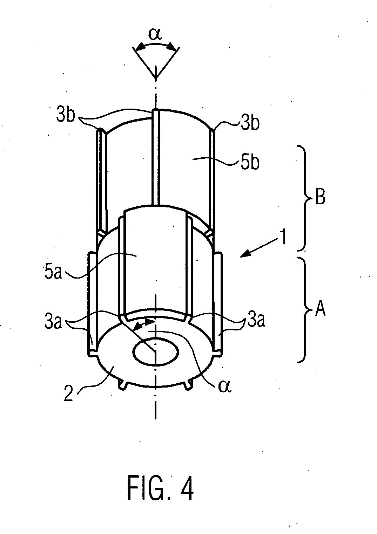

Figur 4 zeigt einen Rotor 1 gemäß einem zweiten Ausführungsbeispiel der Erfindung. Wie aus Figur 4 ersichtlich ist, umfasst der Rotor 1 einen ersten Bereich A und einen zweiten Bereich B. Im ersten Bereich A sind wie im ersten Ausführungsbeispiel eine Vielzahl von Stegen 3a gebildet, wobei zwei benachbarte Stege 3a jeweils einen Magneten 5a zwischen sich aufnehmen. Der zweite Bereich B ist ebenfalls mit einer Vielzahl von Stegen 3b versehen, wobei zwischen zwei benachbarten Stegen 3b jeweils ein Magnet 5b angeordnet ist. Der Aufbau der Stege 3a und 3b entspricht dabei dem im ersten Ausführungsbeispiel dargestellten Aufbau.

Wie aus Figur 4 ersichtlich ist, ist der zweite Bereich B zum ersten Bereich A des Rotors 2 um einen Winkel α von ca. 30° versetzt angeordnet. Durch diese Maßnahme wird erreicht, dass der Rotor an unerwünschten Rastpositionen der elektrischen Maschine stehen bleibt. Dies kann erfindungsgemäß durch die einfach herstellbare Versetzung zwischen dem ersten Bereich A und dem zweiten Bereich B des Rotors 2 erreicht werden, ohne dass eine beispielsweise im Stand der Technik bekannte Schrägung des Rotors notwendig wäre.

Der Rotor des zweiten Ausführungsbeispiels kann dabei unterschiedlich aufgebaut sein. Er kann einerseits als einstückiges Teil mit integral gebildeten Stegen 3a und 3b hergestellt sein. Alternativ kann der Rotor 2 durch zwei separate kürzere Rotoren, welche die Bereiche A und B bilden, bereitgestellt werden, welche bei der Montage lediglich um den Winkel α zueinander verdreht werden. Alternativ kann jeder der Bereiche A und B des Rotors 2 auch durch eine Vielzahl von Blechen bereitgestellt werden, welche im Bereich B um den Winkel α zum Bereich A versetzt angeordnet sind. Ansonsten entspricht dieses Ausführungsbeispiel dem vorhergehenden Ausführungsbeispiel, so dass auf die dort gegebene Beschreibung verwiesen werden kann.

Bleibt der Abstand 17 frei, so hat der Magnet 5 ein gewisses Spiel zwischen den beiden ihn eingrenzenden Stegen 3. Dieses Spiel erleichtert die Montage von Hand wie auch die automatisierte Fertigung. Die axiale Ausrichtung des Magneten 5 kann dann vereinfacht vorgenommen werden, wobei sich der Magnet 5 durch das Spiel zu den Stegen 3 leichter verschieben lässt.

## Patentansprüche

1. Verfahren zur Herstellung eines Rotors für eine elektrische Maschine, insbesondere einen bürstenlosen DC-Motor, mit einem Rotorkörper (2), der eine im Wesentlichen zylindrische Form aufweist, und mit wenigstens einem Magneten (5) mit einer Auflagefläche (6), wobei der Magnet am Umfang des Rotorkörpers angeordnet ist, wobei der Rotorkörper (2) wenigstens einen in Längsrichtung ausgerichteten Steg (3) aufweist und der Rotorkörper (2) entlang seines Umfangs wenigstens eine Aufnahmefläche (4) für einen Magneten (5) aufweist, die von zwei Stegen (3) seitlich begrenzt wird, wobei die Stege (3) an ihrem unteren Ende eine Verjüngung (15) aufweisen,
wobei die Magnete (5) auf dem Rotorkörper (2) aufgeklebt werden,
**dadurch gekennzeichnet, dass**
der Rotorkörper (2) im Randbereich (12,13) der Stege (3) je eine Mulde (14) aufweist, die an der Aufnahmefläche (4) des Rotorkörpers (2) angebracht ist, und
die Mulde (14) in die Verjüngung (15) der Stege (3) übergeht, womit ein Hohlraum (16) für die Aufnahme von überschüssigem Klebstoff geschaffen wird, und
zwischen dem Magneten (5) und dem Rotorköper (2) aufgebrachter Klebstoff beim Andrücken des Magneten (5) an den Rotorkörper (2) zur Seite gedrückt wird und dadurch in dem Hohlraum (16) eine gewisse Menge an Klebstoff aufgenommen wird.

2. Verfahren nach Anspruch 1 **dadurch gekennzeichnet, dass** der Abstand zwischen zwei benachbarten Stegen (3) etwas größer ist als eine Breite des Magneten (5).

3. Verfahren nach einem der vorhergehenden Ansprüche, **dadurch gekennzeichnet, dass** der Magnet (5) zwischen zwei benachbarte Stege (3) einklipsbar ist.

4. Verfahren nach einem der vorhergehenden Ansprüche, **dadurch gekennzeichnet, dass** der Magnet (5) im Wesentlichen an Randbereichen (12, 13) des Rotorkörpers (2) benachbart zu den Stegen (3) mit seiner Auflagefläche (6) am Rotorkörper (2) aufliegt.

5. Verfahren nach einem der Ansprüche 1 bis 4, **dadurch gekennzeichnet, dass** die Aufnahmefläche (4) des Rotorkörpers (2) eine Krümmung aufweist, die von der Auflagefläche (6) des Magneten (5) verschieden ist.

6. Verfahren nach einem der vorhergehenden Ansprüche, **dadurch gekennzeichnet, dass** die Stege (3) einstückig mit dem Rotorkörper (2) gebildet sind.

7. Verfahren nach einem der vorhergehenden Ansprüche, **dadurch gekennzeichnet, dass** der Rotorkörper (2) aus Blechpaketen besteht, welche aus einer Vielzahl von aneinander gereihten dünnen Blechen aufgebaut sind, wobei die Bleche ausgestanzt sind.

8. Verfahren nach einem der vorhergehenden Ansprüche, **dadurch gekennzeichnet, dass** der Magnet (5) an einer Seitenfläche (8) einen unteren Teil (7) aufweist, welcher im Wesentlichen parallel zum Steg (3) verläuft.

9. Verfahren nach einem der vorhergehenden Ansprüche, ferner umfassend einen ersten Rotorbereich (A) mit einem ersten Steg (3a) und einen zweiten Rotorbereich (B) mit einem zweiten Steg (3b), wobei der erste Steg (3a) in Umfangsrichtung des Rotors (2) um einen Winkel (α) versetzt zum zweiten Steg (3b) angeordnet ist.

10. Verfahren nach einem der vorhergehenden Ansprüche, **dadurch gekennzeichnet, dass** der erste Steg (3a) zum zweiten Steg (3b) um einen Winkel (α) zwischen 0,1° und 30°, insbesondere zwischen 5° und 20°, versetzt angeordnet ist.

11. Verfahren nach einem der vorhergehenden Ansprüche, **dadurch gekennzeichnet, dass** bereits magnetisierte oder vormagnetisierte Magnete (5) auf den Rotorkörper (2) montiert werden.

## Claims

1. Method for producing a rotor for an electrical machine, in particular a brushless DC motor, with a rotor body (2) which has a substantially cylindrical form, and with at least one magnet (5) with a resting face (6), the magnet being arranged on the circumference of the rotor body, the rotor body (2) having at least one web (3) aligned in the longitudinal direction, and the rotor body (2) having, along its circumference, at least one receiving face (4) for a magnet (5), said receiving face (4) being delimited laterally by two webs (3), the webs (3) having, at their lower end, a tapered portion (15), the magnets (5) being adhesively bonded to the rotor body (2), **characterized in that** the rotor body (2) has, in the peripheral region (12, 13) of the webs (3), in each case one depression (14) which is provided in the receiving face (4) of the rotor body (2), and the depression (14) merges with the tapered portion (15) of the webs (3), whereby a cavity (16) for receiving excess adhesive is produced, and adhesive applied between the magnet (5) and the rotor body (2) is pushed towards the side as the magnet (5) is pressed against the rotor body (2) and thus a certain amount of adhesive is accommodated in the cavity (16).

2. Method according to Claim 1, **characterized in that** the distance between two adjacent webs (3) is slightly greater than a width of the magnet (5).

3. Method according to one of the preceding claims, **characterized in that** the magnet (5) can be clipped in between two adjacent webs (3).

4. Method according to one of the preceding claims, **characterized in that** the magnet (5), substantially at peripheral regions (12, 13) of the rotor body (2) adjacent to the webs (3), rests with its resting face (6) on the rotor body (2).

5. Method according to Claims 1 to 4, **characterized in that** the receiving face (4) of the rotor body (2) has a curvature, which is different from the resting face (6) of the magnet (5).

6. Method according to one of the preceding claims, **characterized in that** webs (3) are formed integrally with the rotor body (2).

7. Method according to one of the preceding claims, **characterized in that** the rotor body (2) consists of laminate stacks, which are constructed from a large number of thin laminations arranged next to one another in a row, the laminations having being punched out.

8. Method according to one of the preceding claims, **characterized in that** the magnet (5) has, on a side face (8), a lower part (7), which runs substantially parallel to the web (3).

9. Method according to one of the preceding claims, further comprising a first rotor region (A) with a first web (3a) and a second rotor region (B) with a second web (3b), the first web (3a) being arranged offset through an angle (α) with respect to the second web (3b) in the circumferential direction of the rotor (2).

10. Method according to one of the preceding claims, **characterized in that** the first web (3a) is arranged offset through an angle (α) of between 0.1° and 30°, in particular between 5° and 20°, with respect to the second web (3b).

11. Method according to one of the preceding claims, **characterized in that** already magnetized or premagnetized magnets (5) are fitted on the rotor body (2).

## Revendications

1. Procédé de fabrication d'un rotor pour machine électrique, en particulier pour un moteur à courant continu sans balais, doté d'un corps de rotor (2) de forme essentiellement cylindrique et d'au moins un aimant (5) doté d'une surface d'application (6), l'aimant étant disposé à la périphérie du corps du rotor, le corps (2) du rotor présentant au moins une nervure (3) orientée dans le sens de sa longueur et le corps (2) du rotor présentant à sa périphérie au moins une surface (4) qui reçoit un aimant (5) et qui est délimitée par deux nervures (3), les nervures (3) présentant un rétrécissement (15) à leur extrémité inférieure,
les aimants (5) étant collés sur le corps (2) du rotor,
**caractérisé en ce que**
le corps (2) du rotor présente dans la partie de bord (12, 13) des nervures (3) une moulure (14) appliquée sur la surface (4) de réception du corps (2) du rotor,
la moulure (14) se prolonge en le rétrécissement (15) de la nervure (3), ce qui forme une cavité (16) qui reçoit l'adhésif en excès et
l'adhésif appliqué entre l'aimant (5) et le corps (2) du rotor est refoulé latéralement lorsque l'aimant (5) est poussé contre le corps (2) du rotor, une certaine quantité d'adhésif étant ainsi reprise dans la cavité (16).

2. Procédé selon la revendication 1, **caractérisé en ce que** la distance entre deux nervures voisines (3) est légèrement supérieure à la largeur de l'aimant (5).

3. Procédé selon l'une des revendications précédentes, **caractérisé en ce que** l'aimant (5) peut être encliqueté entre deux nervures (3) voisines.

4. Procédé selon l'une des revendications précédentes, **caractérisé en ce que** l'aimant (5) repose par sa surface d'application (6) sur le corps (2) du rotor, essentiellement sur les parties de bord (12, 13) du corps (2) du rotor voisines des nervures (3).

5. Procédé selon l'une des revendications 1 à 4, **caractérisé en ce que** la surface (4) de réception du corps (2) du rotor présente une courbure différente de celle de la surface d'application (6) de l'aimant (5).

6. Procédé selon l'une des revendications précédentes, **caractérisé en ce que** les nervures (3) sont formées d'un seul tenant avec le corps (2) du rotor.

7. Procédé selon l'une des revendications précédentes, **caractérisé en ce que** le corps (2) du rotor est formé de paquets de tôles constitués de plusieurs tôles minces rangées les unes contre les autres, les tôles étant estampées.

8. Procédé selon l'une des revendications précédentes, **caractérisé en ce que** l'aimant (5) présente sur une surface latérale (8) une partie inférieure (7) qui s'étend essentiellement en parallèle à la nervure (3).

9. Procédé selon l'une des revendications précédentes, comprenant en outre une première partie (A) de rotor avec une première nervure (3a) et une deuxième partie (B) de rotor avec une deuxième nervure (3b), la première nervure (3a) étant disposée dans le sens de la périphérie du rotor (2) à un décalage angulaire (α) par rapport à la deuxième nervure (3b).

10. Procédé selon l'une des revendications précédentes, **caractérisé en ce que** la première nervure (3a) est décalée par rapport à la deuxième nervure (3b) d'un angle (α) compris entre 0,1° et 30° et en particulier entre 5° et 20°.

11. Procédé selon l'une des revendications précédentes, **caractérisé en ce que** des aimants (5) déjà magnétisés ou pré-magnétisés sont montés sur le corps (2) du rotor.
